# EUROPEAN PATENT APPLICATION

(11) **EP 2 278 448 A2**
(43) Date of publication of application: **26.01.2011**
(21) Application number: 10167134.5
(22) Date of filing: 24.06.2010
(51) Int. Cl.: G06F 3/12

(54) **Print apparatus and method of controlling printer**

(30) Priority: 15.07.2009 KR 20090064543
(71) Applicant: Bixolon Co., Ltd., Gyunggi-do (KR)
(72) Inventor: Choi, Hae Yong, Gyunggi-do Suwon (KR); Kim, Byung Gon, Gyunggi-do, Suwon (KR); Ha, Dong Hwan, Seoul Gwanak-gu (KR); Ahn, Gi Hwan, Gyunggi-do, Suwon (KR); Shin, Woo Chul, Gyunggi-do, Pyeongtaek (KR)
(74) Representative: Ketelaars, Maarten F.J.M.

(57) **Abstract**

A print apparatus includes a non-volatile memory retaining stored content even when power is not supplied to the print apparatus, the non-volatile memory having areas for a plurality of data, key codes specifying each of the plurality of data, and the amounts each indicating the length of each of the plurality of data; and a storage unit receiving a first command and information that follows the first command from a host device, and storing data included in the information, a key code specifying the data, and the amount indicating the length of the data in the non-volatile memory.

## Description

### CROSS-REFERENCE TO RELATED APPLICATIONS

This application claims the priority of Korean Patent Application No. 10-2009-0064543 filed on July 15, 2009, in the Korean Intellectual Property Office, the disclosure of which is incorporated herein by reference.

### BACKGROUND OF THE INVENTION

### Field of the Invention

The present invention relates to a print apparatus and a method for controlling a printer and, more particularly, to a print apparatus capable of quickly finding and reading data stored in a non-volatile memory, and a printer control method.

### Description of the Related Art

In general, in an information processing device such as a POS (Point of Sale) cash register or the like, a host computer side needs to acquire information about a print apparatus. To acquire the information, in the related art, a type ID, a firmware version ID of the print apparatus, or the like, is previously recorded in a program code, and the host computer side refers to it. Namely, the host computer side may refer to a pertinent table to match the acquired ID, an actual type name, and the like, in order to acquire desired information.

However, the related art has problems in that the information regarding the corresponding print apparatus must be stored in the host computer side, and its management is complicated.

### SUMMARY OF THE INVENTION

An aspect of the present invention provides a print apparatus capable of finding and reading data stored in a non-volatile memory quickly or within a short time and a printer control method.

According to an aspect of the present invention, there is provided a print apparatus including a non-volatile memory retaining stored content even when power is not supplied to the print apparatus, the non-volatile memory having areas for a plurality of data, key codes specifying each of the plurality of data, and the amounts each indicating the length of each of the plurality of data; and a storage unit receiving a first command and information that follows the first command from a host device, and storing data included in the information, a key code specifying the data, and the amount indicating the length of the data in the non-volatile memory.

The non-volatile memory may include: a first area successively storing the plurality of key codes and amounts; and a second area successively storing the plurality of key codes and a plurality of data specified by the amounts.

The print apparatus may further include: a data reading unit receiving a second command and information that follows the second command from the host device, reading data designated by the information that follows the second command among data stored in the non-volatile memory and transmitting the read data to the host device in response to the second command, the information that follows the second command including a key code.

The data reading unit may include a key-searching unit sequentially searching the first area of the non-volatile memory for a key code designated by the information that follows the second command, and read data specified by the searched key code, skipping over data stored in the second area by the amounts which have been searched before the key code searched by the key searching unit, and transmit the read data.

According to another aspect of the present invention, there is provided a printer control method including: receiving a first command and information that follows the first command from a host device and storing the information that follows the first command in a non-volatile memory in response to the first command, the information including a plurality of data, key codes specifying each of the plurality of data, and the amounts, each indicating the length of each of the plurality of data; and receiving a second command and information that follows the second command from the host device, reading data designated by the information that follows the second command among data stored in the non-volatile memory and transmitting the read data to the host device in response to the second command.

In storing the information that follows the first command in the non-volatile memory, a plurality of key codes and amounts may be successively stored in a first area of the non-volatile memory, and a plurality of data specified by the key codes and the amounts may be successively stored in a second area of the non-volatile memory.

The reading of data designated by the information that follows the second command and transmitting the read data to the host device may include: searching the first area of the non-volatile memory for a key code designated by the information that follows the second command; and reading data specified by the searched key code, skipping over data stored in the second area by the amounts which have been searched before the searched key code, and transmitting the read data.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a schematic block diagram of a print apparatus according to an exemplary embodiment of the present invention;

FIG. 2 illustrates the format of information stored in a non-volatile memory of the print apparatus according to an exemplary embodiment of the present invention;

FIG. 3 illustrates an example of information stored in the non-volatile memory of the print apparatus according to an exemplary embodiment of the present invention; and

FIG. 4 is a flow chart illustrating a process of a printer control method according to an exemplary embodiment of the present invention.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

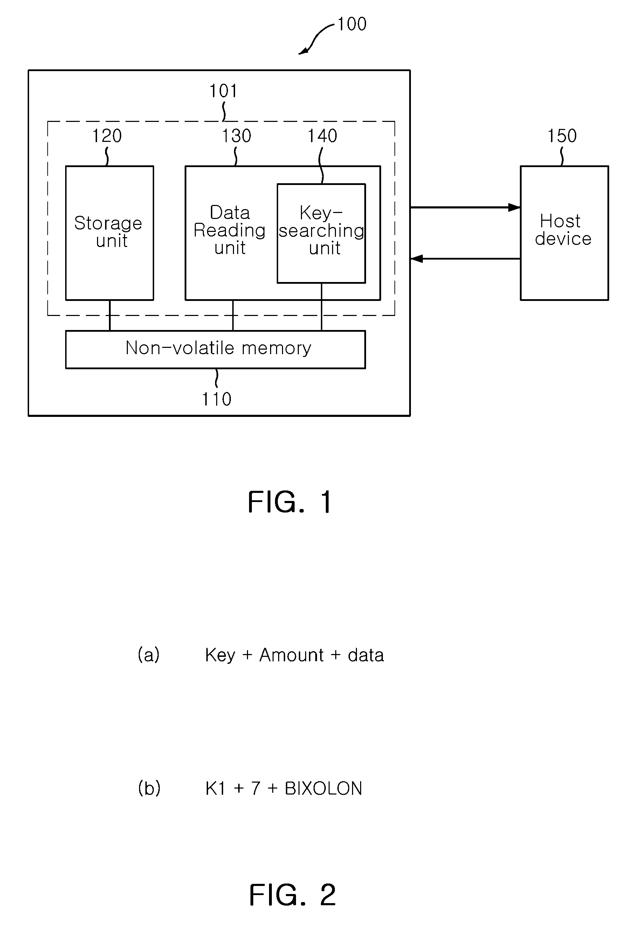

FIG. 1 is a schematic block diagram of a print apparatus according to an exemplary embodiment of the present invention.

With reference to FIG. 1, a print apparatus 100 according to the present exemplary embodiment may include a non-volatile memory 110 and a storage unit 120.

The print apparatus 100, connected to a host device 150, may store information according to a command transmitted from the host device 150 or read stored information and transmit it to the host device 150.

The non-volatile memory 110 may maintain stored content even when power is not supplied to the print apparatus. In the present exemplary embodiment, the non-volatile memory 110 may have areas for storing a plurality of data, key codes specifying the data, and the amounts each indicating the length of each data. In the present exemplary embodiment, the non-volatile memory 110 may include a first area for successively storing the key codes and amounts with respect to the plurality of data and a second area successively storing a plurality of data specified by the key codes and amounts.

The storage unit 120 may receive a first command and information that follows the first command from the host device 150. In the present exemplary embodiment, the first command may be a command instructing the storage unit 120 to store the information that follows the first command in the non-volatile memory 110. The storage unit 120 may store the information that follows the first command, namely, data, a key code specifying the data, and the amount indicating the length of the data in the non-volatile memory 110.

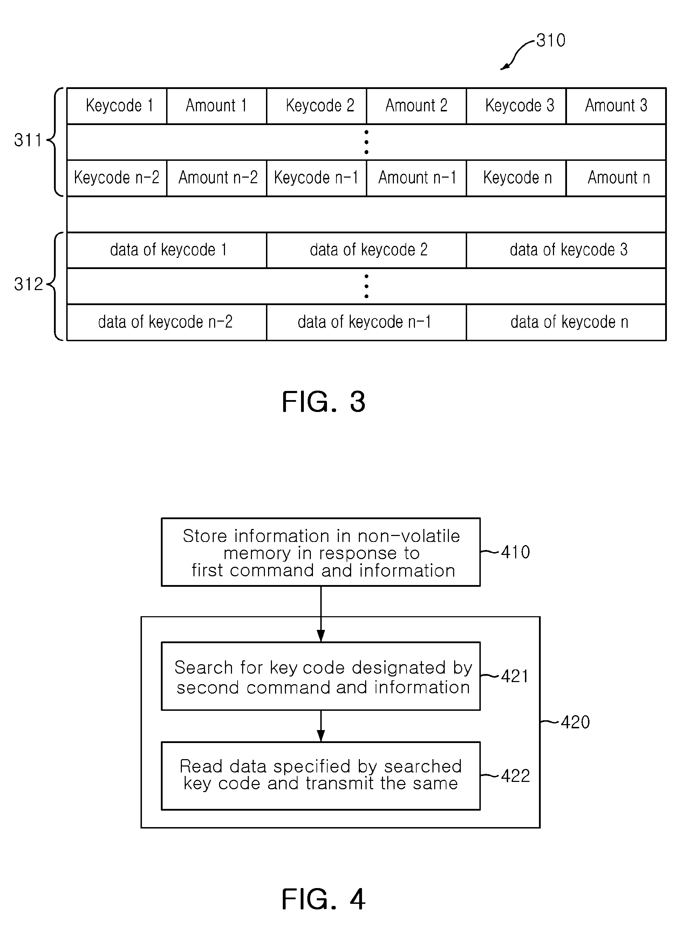

FIG. 2 illustrates the format of information stored in a non-volatile memory of the print apparatus according to an exemplary embodiment of the present invention, and FIG. 3 illustrates an example of information stored in the non-volatile memory of the print apparatus according to an exemplary embodiment of the present invention.

With reference to FIG. 2(a), the information stored in the non-volatile memory 110 of the print apparatus 100 may include a key code, an amount and data. The key code, information specifying the data, may be previously defined to indicate what kind of information the data is. For example, data such as the manufacturer of the printer, the printer model, the serial number, and the like, may be specified according to the key code. The amount may indicate an actual length of the data. Namely, the amount may indicate the number of bytes of the data when the data is stored in the memory.

FIG. 2(b) shows an example of the information stored in the non-volatile memory. In the present exemplary embodiment, the key code (K1) may be previously defined to indicate a manufacturer of the printer. Thus, 'BIXOLON', the name of a printer manufacturer, may be inputted the data. The amount may indicate seven bytes required to store the data 'BIXOLON' in the non-volatile memory.

With reference to FIG. 3, a non-volatile memory 310 according to the present exemplary embodiment may be divided into a first area 311 and a second area 312. A plurality of key codes and amounts may be successively stored in the first area 311. A plurality of data specified by the key codes and amounts may be successively stored in the second area 312.

In the present exemplary embodiment, because the area 311 storing the key codes and the amounts and the area 312 storing the data corresponding to the key codes are separately configured, a key code designated by a command transmitted from the host device can be searched within a short time, and time required for reading data corresponding to the designated key code can be reduced.

The print apparatus 100 according to the present exemplary embodiment may further include a data reading unit 130. The data reading unit 130 may read data stored in the non-volatile memory in response to the second command received from the host device 150, and transmit the read data to the host device 150.

The data reading unit 130 may receive a second command and information that follows the second command from the host device 150. In the present exemplary embodiment, the second command may be a command for reading data designated by the information that follows the second command, among the data stored in the non-volatile memory and transmitting the read data to the host device 150. In the present exemplary embodiment, the information that follows the second command may include a particular key code. The data reading unit 130 may read the data corresponding to the key code from the non-volatile memory and transmit the read data to the host device 150.

In the present exemplary embodiment, the data reading unit 130 may include a key searching unit 140. The key-searching unit 140 may sequentially search the first area of the non-volatile memory 110 for a key code designated by the information that follows the second command.

In this case, the data reading unit 130 may read data corresponding to the key code designated by the information that follows the second command, skipping over data stored in the second area 312 by the amounts searched before the designated key code searched by the key search unit 140, and transmits the read data.

In the present exemplary embodiment, the storage unit 120, the data reading unit 130, and the key searching unit 140 may be implemented in a central processing unit (CPU) 101.

The operation of the print apparatus according to an exemplary embodiment of the present invention will be described with reference to FIGS. 1 and 3.

First, a storing process will now be described. First, second, and third information may be stored in the non-volatile memory disclosed in FIG. 3. The first information to third information may be expressed as follows:
(1) K1 7 BIXOLON
(2) K2 8 SPP-R200
(3) K3 5 12345

Namely, the first key code (K1) may specify a manufacturer of the printer, the first data corresponding to the first key code may indicate 'BIXOLON' , the manufacturer of the printer, and a first amount may indicate 7, the number of byte of the first data. The second key code (K2) may specify a model name of the printer, the second data corresponding to the second key code may indicate 'SPP-R200', the model name of the printer, and a second amount may indicate 8, the number of byte of the second data. The third key code (K3) may specify a serial number of the printer, the third data corresponding to the third key code may indicate 12345, the serial number of the printer, and a third amount may indicate 5, the number of byte of the third data. The first key code (K1), the second key code (K2), and the third key code (K3) may be stored in the areas of key code 1, key code 2, and key code 3 in FIG. 3, respectively. The first amount 7, the second amount 8 and the third amount 5 may be stored in the areas of Amount 1, Amount 2, and Amount 3 in FIG. 3. The first data (BIXOLON), the second data (SPP-R200), and the third data (12345) may be stored in the areas of data of key code 1, data of key code 2, and data of key code 3.

With reference to FIG. 1, the first information to third information may be transmitted to the print apparatus from the host device 150 on the heel of the first command that commands that the first information to third information should be stored in the non-volatile memory, respectively. The storage unit 120 of the print apparatus 100 may store the first information to third information received on the heel of the first command in the non-volatile memory 110.

With reference to FIG. 3, the key code and amount information of each of the first information to third information may be successively stored in the first area 311 of the non-volatile memory 310, and the respective data of the first information to third information may be successively stored in the second area 312 of the non-volatile memory 310.

The process of reading stored data and transmitting the read data to the host device will now be described. With reference to FIGS. 1 to 3, the second command, i.e., a command instructing to read data stored in the non-volatile memory and transmit the read data, and information that follows the second command may be received from the host device 150. In the present exemplary embodiment, the information that follows the second command may include the third key code (K3).

When the third key code (K3) is designated by the information that follows the second command received from the host device 150, the key searching unit 140 may sequentially search the key codes and amounts stored in the first area 311 of the non-volatile memory 310 for the third key code (K3). In this case, the key searching unit 140 may pass by the first key code (K1), the first amount (7), the second key code (K2), and the second amount (8) before it finds the area (Key code 3) in which the third key code (K3) is stored. In this case, the numbers of bytes of the first amount (7) and the second amount (8) which have been passed by and may be calculated. In the present exemplary embodiment, the numbers of bytes in the first amount (7) and the second amount (8) which have been passed by the key searching unit 140 may be 7 and 8, respectively.

In this case, the data reading unit 130 may recognize the bytes corresponding to third amount (5), skipping over the numbers of bytes of the first amount (7) and the second amount (8) which were passed by the key searching unit 140 in the second area 312 of the non-volatile memory 310, as data corresponding to the third key code (K3).

In this manner, in the present exemplary embodiment, the data indicating the substantial information regarding the printer and the key code specifying the data and the amount are stored in different areas of the non-volatile memory. Thus, when a key code is designated from the host device in order to read the stored data, the time required for searching the print apparatus for the key code can be reduced. Also, in order to find data specified by the key code, the amount indicating the length of the data is used, reducing the time required for finding data and thereby increasing accuracy. Accordingly, because the data stored in the print apparatus can be found and read within a short time, the performance of the print apparatus can be improved.

FIG. 4 is a flow chart illustrating a process of a printer control method according to an exemplary embodiment of the present invention.

With reference to FIG. 4, a printer control method according to the present exemplary embodiment of the present invention may include a step (410) of storing information in the non-volatile memory in response to the first command and information, and a step (420) of reading data designated by the information that follows the second command among the data stored in the non-volatile memory and transmitting the read data to the host device in response to the second command.

In the storing step (410), the first command and the information that follows the first command may be received from the host device, and the information that follows the first command may be stored in the non-volatile memory in response to the first command. In the present exemplary embodiment, the information may include a plurality of data, key codes specifying the data, and the amounts each indicating the length of each piece of data. In step (410), the plurality of key codes and the amounts may be successively stored in the first area of the non-volatile memory, and the plurality of data specified by the key codes and the amounts may be successively stored in the second area of the non-volatile memory.

In the step (420) of reading and transmitting data, the second command and the information that follows the second command are received from the host device, and data designated by the information that follows the second command, among the data stored in the non-volatile memory, may be read and the read data may be transmitted to the host device in response to the second command.

In the present exemplary embodiment, the step (420) of reading and transmitting data may include: a key search step (421) of searching the first area of the non-volatile memory for a key code designated by the information that follows the second command and a step (422) of reading data specified by the searched key code, skipping over the data stored in the second area by the amounts searched before the key code searched in the key searching step, and transmitting the read data.

As set forth above, according to exemplary embodiments of the invention, because the print apparatus has improved performance, data stored in the non-volatile memory can be searched and read within a short time.

While the present invention has been shown and described in connection with the exemplary embodiments, it will be apparent to those skilled in the art that modifications and variations can be made without departing from the spirit and scope of the invention as defined by the appended claims.

## Claims

1. A print apparatus comprising
a non-volatile memory retaining stored content even when power is not supplied to the print apparatus, the non-volatile memory having areas for a plurality of data, key codes specifying each of the plurality of data, and the amounts each indicating the length of each of the plurality of data; and
a storage unit receiving a first command and information that follows the first command from a host device, and storing data included in the information, a key code specifying the data, and the amount indicating the length of the data in the non-volatile memory.

2. The apparatus of claim 1, wherein the non-volatile memory comprises:
a first area successively storing the plurality of key codes and amounts; and
a second area successively storing the plurality of data specified by the key codes and the amounts.

3. The apparatus of claim 2, further comprising:
a data reading unit receiving a second command and information that follows the second command from the host device, reading data designated by the information that follows the second command among data stored in the non-volatile memory and transmitting the read data to the host device in response to the second command, the information that follows the second command including a key code.

4. The apparatus of claim 3, wherein the data reading unit comprises a key-searching unit sequentially searching the first area of the non-volatile memory for a key code designated by the information that follows the second command, and reads data specified by the searched key code, skipping over data stored in the second area by the amounts which have been searched before the key code searched by the key searching unit, and transmits the read data.

5. A printer control method comprising:
receiving a first command and information that follows the first command from a host device and storing the information that follows the first command in a non-volatile memory in response to the first command, the information including a plurality of data, key codes specifying each of the plurality of data, and the amounts each indicating the length of each of the plurality of data; and
receiving a second command and information that follows the second command from the host device, reading data designated by the information that follows the second command among data stored in the non-volatile memory and transmitting the read data to the host device in response to the second command.

6. The method of claim 5, wherein, in storing the information that follows the first command in the non-volatile memory, a plurality of key codes and amounts are successively stored in a first area of the non-volatile memory, and a plurality of data specified by the key codes and the amounts are successively stored in a second area of the non-volatile memory.

7. The method of claim 6, wherein the reading of data designated by the information that follows the second command and transmitting the read data to the host device comprises:
searching the first area of the non-volatile memory for a key code designated by the information that follows the second command; and
reading data specified by the searched key code, skipping over data stored in the second area by the amounts which have been searched before the searched key code, and transmitting the read data.
